(19) Europäisches Patentamt
European Patent Office
Office européen des brevets

(11) **EP 3 192 592 A1**

(12) **EUROPÄISCHE PATENTANMELDUNG**

(43) Veröffentlichungstag:
**19.07.2017 Patentblatt 2017/29**

(51) Int Cl.:
*B22C 9/08* *(2006.01)*   *B01D 39/16* *(2006.01)*

(21) Anmeldenummer: **16157676.4**

(22) Anmeldetag: **26.02.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **14.01.2016 DE 102016000270**

(71) Anmelder: **access e.V.**
**52072 Aachen (DE)**

(72) Erfinder:
• **Hecht, Ulrike**
**52066 Aachen (DE)**
• **Mathes, Michael**
**51429 Bergisch Gladbach (DE)**

(74) Vertreter: **Freischem & Partner Patentanwälte mbB**
**Salierring 47-53**
**50677 Köln (DE)**

(54) **FILTER**

(57) Die Erfindung bezieht sich auf die Filtration metallischer Schmelzen mit Hilfe von Schüttgutfiltern, auf den Aufbau der Schüttgutfilter sowie auf die Beschaffenheit und Herstellung der Filterkörper. Die Erfindung betrifft Filterkörper, ein Verfahren zu deren Herstellung, einen Filter, ein Verfahren zur Filtration, sowie die Verwendung der Filterkörper und die Regenerierung des Filters oder der Filterkörper.

Fig. 2

**Beschreibung**

Die Erfindung bezieht sich auf die Filtration metallischer Schmelzen mit Hilfe von Schüttgutfiltern, auf den Aufbau der Schüttgutfilter sowie auf die Beschaffenheit und Herstellung der Filterkörper. Die Erfindung betrifft Filterkörper, Verfahren zu deren Herstellung, einen Filter, ein Verfahren zur Filtration, sowie die Verwendung der Filterkörper und die Regenerierung des Filters oder der Filterkörper.

Beim Gießen schmelzflüssiger Metalle, nachfolgend Schmelze genannt, werden gegebenenfalls vorhandene, nichtmetallische Einschlüsse (Verunreinigungen) in der Schmelze durch einen Gießfilter zurückgehalten. Hierbei handelt es sich um ein gängiges Verfahren der Schmelzfiltration, das auf physikalischen und chemischen Wechselwirkungen zwischen dem Gießfilter und den oben genannten Einschlüssen beruht.

Gießfilter sind im Stand der Technik häufig poröse keramische Vollkörper, die in das Anguss-System an einem oder mehreren geeigneten Orten angebracht werden und die beim Formfüllen von der einfließenden Schmelze durchströmt werden. Gemeinhin werden Filter einmalig benutzt und sind nicht wieder verwendbar.

Keramische Filter für metallische Schmelzen müssen eine Reihe von Bedingungen erfüllen, vor allem müssen sie temperaturbeständig, mechanisch fest um dem Druck der einfließenden Schmelze zu widerstehen und thermoschockbeständig sein. Sie bestehen üblicherweise aus einer Keramik, z.B. einer Keramik wie $Al_2O_3$, Mullit, Silikat, SiC, $ZrO_2$ o. a., und weisen eine offene Porenstruktur mit einer charakteristischen Porengrößenverteilung und Porendichte auf.

Weit verbreitet sind Filter mit einer schwammartigen, durchströmbaren Struktur, die als "ceramic foam filters" bekannt sind (vgl. DE 23 01 662 A1, DE 39 05 080 C1, DE 694 01 105 T2, DE 196 05 149 A1, EP 0 341 203 A2, DE 196 05 149 A1, DE 10 2011 109 681 A1, DE 198 38 263 C2). Ihre Herstellung erfolgt üblicherweise durch das Auftragen eines keramischen Schlickers auf einen Kunststoffschwamm, der nachfolgenden Trocknung, dem Herausbrennen des Kunststoffs und dem Sintern des nun offenporigen keramischen Filterkörpers.

In diesen "ceramic foam filters" wird normalerweise für optimale Filtration von Metallschmelzen die Porengröße verkleinert und die durchströmte Filterlänge erhöht. Diese beiden Faktoren führen zu einem höheren Druckabfall im Filter, wodurch wiederum die Durchflussgeschwindigkeit, und damit die Produktionsgeschwindigkeit, abnehmen.

Janke schlug daher im Jahr 1992 spiralförmige Filter vor, die sich allerdings nicht durchsetzen konnten (D. Janke, K. Raiber, Grundlegende Untersuchungen zur Optimierung der Filtration, von Stahlschmelzen, Max-Planck-Institut für Eisenforschung GmbH, Abschlußbericht Forschungsvertrag Nr. 7210-CF/106, 1.7.1988-31.12.1992).

Dank ihrer hohen spezifischen Oberfläche sind keramische Schaumfilter besonders effektiv im Modus der Tiefenfiltration, bei der auch Einschlüsse, die kleiner als die Porenöffnungen sind, effektiv zurückgehalten werden können. Um diese Tiefenwirkung zusätzlich zu verstärken, können die porösen Filterkörper durch chemisch aktive Komponenten oder Beschichtungen für den jeweiligen Anwendungsbereich optimiert werden [z.B. DE 10 2011 109 681 A1], z. B. für Aluminium-, Stahl-, und Nickelbasislegierungen.

Filter bieten außerdem die Möglichkeit, turbulente Strömungen beim Einfüllen in die Gießform zu vermeiden, indem die Strömung beim Durchgang durch das dreidimensionale Porennetzwerk des Filters beruhigt wird.

Neben oder zusätzlich zu den oben genannten keramischen Schaumfiltern kommen auch keramische Platten mit zellularen und/oder lochartigen Strukturen zum Einsatz. Diese funktionieren ähnlich wie Siebe und halten vornehmlich jene Fremdpartikel (Einschlüsse, Verunreinigungen) zurück, die größer als die Maschenweite sind.

Eine reichhaltige, öffentlich zugängliche Fachliteratur sowie Datenblätter diverser Filterhersteller enthalten Angaben zur Herstellung, Struktur und Handhabung der oben genannten Gießfilter. Ebenso reichhaltig sind Berichte über die Filterwirkung und deren Effizienz im praktischen Einsatz. Sie dokumentieren u.a. den statistischen Nachweis der Filterwirkung als Funktion der Einsatzbedingungen.

US 2013 0032767 A1 beschreibt Nanokristalle in Form von Octopoden aus Halbleitern.

JP 4854617 B2 beschreibt Nano-Einkristalle in Form von Tetrapoden.

EP 2 324 921 A1 beschreibt Abgasfilter in Wabenstruktur, in denen Nanokristalle in Form von Tetrapoden angeordnet sein können.

DE 20 2012 011 892 U1 beschreibt einen Aerographit aus gebündelten Nanoröhren, das aufgrund der Packungsdichte und damit fehlender Permeabilität als Filter ungeeignet ist.

JP 2616043 B2 beschreibt Nanokristalle aus Zinkoxid auf einem Trägermaterial, die die Form von Tetrapoden haben können.

JP 02211293 A beschreibt Nanokristalle aus Zinkoxid zur katalytischen Behandlung von Abwasser.

CN 104117371 A beschreibt Nanokristalle aus Zinkoxid in Form von Tetrapoden zur katalytischen Behandlung von Luft.

Aufgabe der Erfindung ist es, Filterkonzepte (wie beispielsweise Schüttgutfilter) für die Filtration insbesondere von metallischen Schmelzen darzustellen und zu realisieren, um eine exzellente Tiefenfiltration bei gleichzeitig guter Permeabilität für metallische Schmelzen zu erreichen. Angestrebt wird ein Filterkonzept, welches die Lücke zwischen Kugelschüttungen (Porosität $\varepsilon \cong 0.43$ bis $0.45$) und keramischen Schaumfiltern (Porosität $\varepsilon \cong 0.7$ bis $0.8$) schließt, dergestalt dass die Porosität und die spezifische filteraktive Oberfläche gezielt eingestellt werden können.

Die der Erfindung zugrunde liegende Aufgabe wird in einer ersten Ausführungsform durch einen Filterkörper für einen Schüttgutfilter gelöst, der dadurch gekennzeichnet ist, dass der Filterkörper ein Volumen in einem Bereich von 5 bis 500.000 mm$^3$ aufweist und der Filterkörper nicht kugelförmig ist.

Ist der Filterkörper kleiner als die erfindungsgemäßen Filterkörper, so sind die Filterkörper in einem Filter von verschiedenen interessanten Fluiden wie Metallschmelzen aufgrund der höheren Packungsdichte und geringerer Permeabilität nicht mehr leicht durchströmbar. Zudem ist die Gefahr größer, dass Filterkörper oder filigrane Teile von zu kleinen Filterkörpern nicht im Filter zurückgehalten werden und im Filtrat landen.

Die der Erfindung zugrunde liegende Aufgabe wird alternativ oder gleichzeitig in einer weiteren Ausführungsform durch Filterkörper gelöst, welche dadurch gekennzeichnet sind, dass sie aus einem temperaturbeständigen Material gefertigt sind, dessen Schmelzpunkt deutlich höher als der der Schmelze liegt und die aufgrund ihrer Größe, Form und Beschaffenheit eine permeable Schüttung erzeugen, die filteraktiv wirkt. Der Begriff "filteraktiv" umfasst hier die Summe aller physikalischen und chemischen Wechselwirkungen, die dazu führen, dass nichtmetallische Verunreinigungen aus der metallischen Schmelze im Schüttgutfilter verbleiben, also nicht in die Gießform eingetragen werden.

Die erfindungsgemäßen Filterkörper haben den Vorteil, dass sie zu Filtern für metallische Schmelzen zusammengesetzt werden, die im Unterschied zu den bislang bekannten Filtertypen in der Form, der Größe, der Oberfläche und dem Material viel freier bestimmt werden können. Die Filterkörper können auch beispielsweise regeneriert werden, so dass sie wiederverwendbar sind.

Die erfindungsgemäßen Filterkörper haben beispielsweise gegenüber den Ceramic Foam Filters aus keramischem Schaum den Vorteil, dass sie frei konfektionierbar sind (beispielsweise in Kartuschen, in Rohren, oder auch als Schüttgut ...). Die erfindungsgemäßen Filterkörper können so beispielsweise auch geschaufelt werden. Darüber hinaus wird durch die Erfindung eine ganz neue Art des Handlings im Bereich der Filtration ermöglicht. Beispielsweise kann das Schüttgut auf jeden Gießvorgang abgestimmt sehr einfach genau dosierbar eingesetzt werden. Der Filter wird durch die erfindungsgemäßen Filterkörper chargierbar und portionierbar.

Vorzugsweise können die erfindungsgemäßen Filterkörper in Schüttgutfiltern eingesetzt werden. Schüttgutfilter eröffnen neue Entwicklungsmöglichkeiten bezüglich des Designs der Filter, der Herstellungsverfahren und der chemischen Aktivierung, als auch im Bereich der Anwendung beim Nutzer, d.h. beispielsweise in den Gießereien.

Nach heutigem Stand der Technik sind im Bereich der Gießfilter für den Formguss (Sandguss, Kokillenguss, Feinguss, Druckguss usw.) keine partikulären Filterkonzepte bekannt, wie sie für andere flüssige oder gasförmige Medien, z.B. für Wasser oder Rauchgase, angewendet werden. Kugelschüttungen oder Schüttungen von zylindrischen Körpern werden ausschließlich dort verwendet, wo eine langsame, kontinuierliche Durchströmung des Filters gegeben ist, z.B. beim Stranggießen von Aluminium. Für den Formguss sind solche Filter gemeinhin zu dicht gepackt (kleine Kugeln) oder nicht effektiv (große Kugeln).

Vorzugsweise ist der einzelne Filterkörper oder eine Mehrzahl der erfindungsgemäßen Filterkörper für die Filtration von metallischen Schmelzen geeignet. Partikuläre Filter (Schüttgutfilter), wie sie für andere flüssige oder gasförmige Medien, z.B. für Wasser oder Rauchgase, angewendet werden, sind gemeinhin zu dicht gepackt, um die für den Gießprozess erforderliche Permeabilität des Gießfilters für die ihn durchströmende Schmelze zu gewährleisten. Andererseits können sie beachtlich gute Filterwirkungen erzielen, besonders wenn es sich um Schüttgutfilter mit hoher spezifischer Oberfläche handelt, und zeichnen sich durch alle Vorteile granularer Medien aus bzgl. der Handhabung, Trocknung, Aktivierung und/oder Rekonditionierung.

**Geometrie und Dimensionen der Filterkörper**

Eine Umfangskugel im Sinne der Erfindung ist die kleinste hypothetische Kugel, die um einen einzelnen Filterkörper gelegt werden kann, so dass der einzelne Filterkörper nicht aus der Kugel heraussteht.

Vorzugsweise überschneiden sich die Umfangskugeln von wenigstens zwei benachbarten Filterkörpern (beispielsweise in der Schüttung) zu wenigstens 10%.

Vorzugsweise weist die Umfangskugel der einzelnen Filterkörper im Median einen Durchmesser im Bereich von 1 bis 150 mm, besonders bevorzugt in einem Bereich von 3 bis 60 mm auf.

Das Verhältnis des Volumens zur Oberfläche einer Kugel bestimmt sich nach der Gleichung:

$$\frac{V}{O} = \frac{d}{6},$$

wobei V das Volumen, O die Oberfläche und d der Durchmesser ist.

Daraus ergibt sich, dass bei einer Kugel das Verhältnis von (Oberfläche multipliziert mit dem Durchmesser) zum Volumen immer 6 beträgt.

Für die Zwecke der Erfindung wird der Begriff "Oberflächenverhältnis" als Verhältnis von Oberfläche des Filterkörpers multipliziert mit dem Durchmesser der Umfangskugel zum Volumen des Filterkörpers definiert. Vorzugsweise liegt das Oberflächenverhältnis der Filterkörper bei wenigstens 7, besonders bevorzugt bei wenigstens 10. Unabhängig davon liegt das Oberflächenverhältnis der Filterkörper für beide der vorgenannten Untergrenzen 7 oder 10 vorzugsweise bei bis zu 1000.

Vorzugsweise weist der Filterkörper im Median einen Durchmesser im Bereich von 0,1 bis 150 mm, besonders bevorzugt in einem Bereich von 1 bis 60 mm auf.

Der Rauminhalt oder das Volumen der einzelnen Filterkörper liegt im Median vorzugsweise in einem Bereich von 5 bis 500.000 mm3, besonders bevorzugt in einem Bereich von 5 bis 50.000 mm3.

Die Oberfläche der einzelnen Filterkörper liegt im Median vorzugsweise in einem Bereich von 5 bis 50000 bevorzugt von 5 bis 20000 mm$^2$.

Das Verhältnis der Oberfläche zu Volumen der einzelnen Filterkörper liegt im Median vorzugsweise in einem Bereich kleiner als 5.

Alle vorgenannten Dimensionen können mit einem Mikroskop oder mit einem Messschieber bestimmt bzw. aus messbaren Längen berechnet werden.

Die Filterkörper sind vorzugsweise nicht-konvexe Körper. Konvexe Körper im Sinne der Erfindung sind solche Körper, bei denen sich zwei beliebige Punkte auf der Oberfläche des Körpers durch eine Gerade verbinden lassen, die immer vollständig innerhalb des Körpers liegt. Vorzugsweise weist die Form der einzelnen Filterkörper einen zentralen Mittelkörper und wenigstens drei daraus hervorstehende Auswölbungen, insbesondere Beine, auf. Die Auswölbungen sind vorzugsweise gerade. Die Anzahl der Auswölbungen liegt vorzugsweise in einem Bereich von 3 bis 20, besonders bevorzugt in einem Bereich von 4 bis 8. Die Länge der Auswölbungen liegt vorzugsweise in einem Bereich von 10 bis 50% des Durchmessers der Umfangskugel. Die Länge der Auswölbungen liegt unabhängig davon in einem Bereich von 1 bis 75 mm, vorzugsweise von 3 bis 30 mm. Das Volumen der einzelnen Auswölbungen eines Filterkörpers liegt vorzugsweise in einem Bereich von 10% bis 30% des Volumens eines gesamten Filterkörpers. Ganz besonders bevorzugt weisen die einzelnen Filterkörper die Form von einem Multipoden wie beispielsweise Tetrapoden, Hexapoden oder Octopoden auf. Die Enden der Beine oder Auswölbungen können rund, flach oder eckig sein. Die Beine können gerade, konisch oder gebogen sein.

Die Auswölbungen können beispielsweise unterschiedlich lang sein. Beispielsweise weisen wenigstens zwei, insbesondere vier Auswölbungen eines Filterkörpers dieselbe Länge auf.

Das Verhältnis der Länge der Beine zum mittleren Durchmesser der Beine liegt vorzugsweise bei wenigstens 1,2:1, ganz besonders bevorzugt in einem Bereich von 1,5:1 bis 5:1.

Die Filterkörper weisen vorzugsweise einen Symmetriegrad von wenigstens vier auf (vgl. Gruppentheorie) und gehören besonders bevorzugt den Symmetriegruppen S4 oder Oh an.

Vorzugsweise sind die kleinen Filterkörper, aus denen beispielsweise das Schüttgut aufgebaut wird, hinsichtlich ihrer Form, Größe und Oberflächenbeschaffenheit so ausgelegt, dass sie eine optimale Filterwirkung bei gleichzeitig guter Durchströmung des Schüttguts gewährleisten. Dabei kann die Geometrie der Filterkörper vorzugsweise regellos oder speziell geformt sein; die Oberfläche kann vorzugsweise glatt oder rau sein, vorzugsweise blank oder beschichtet. Demnach werden die Filterkörper vorzugsweise durch Merkmale wie Größe und Form, spezifische Oberfläche und chemische Zusammensetzung definiert, die dem jeweiligen Anwendungsfall entsprechend angepasst sind.

Die Oberfläche kann eine Rauigkeit mit regelmäßigen oder unregelmäßigen Oberflächenstrukturen aufweisen.

Vorzugsweise haben die kleinen Filterkörper die Form von Tetra-, Hexa- oder Multipoden, oder aber vollkommen regellose Formen, wie sie zum Beispiel auf natürliche Weise durch Ausfällung chemischer Lösungen usw. entstehen.

## Weitere Eigenschaften der Filterkörper

Vorzugsweise ist das Material der Filterkörper polykristallin oder amorph.

Vorzugsweise sind die Filterkörper nicht auf einen Carrier oder einen Träger gebunden. Besonders bevorzugt sind die Filterkörper nicht stoffschlüssig miteinander verbunden.

Die Filterkörper bestehen vorzugsweise zu wenigstens 50%, insbesondere vollständig, aus einem anorganischen, insbesondere oxidischen oder carbidischem Material, und ganz besonders bevorzugt aus Zirkonoxid, Silizimcarbid, Aluminiumoxid wie beispielsweise Al2O3, Titanoxid wie beispielsweise TiO2, Mullit oder Silikat.

Vorzugsweise bestehen die kleinen Filterkörper, aus denen vorzugsweise das Schüttgut aufgebaut wird, aus keramischen Materialien (Oxide, Nitride, Karbide, Boride oder Mischungen), die der jeweiligen metallischen Schmelze widerstehen und die gegebenenfalls eine oder mehrere chemisch aktive Komponenten beinhalten bzw. auf ihrer Oberfläche vermehrt aufweisen.

Vorzugsweise weisen die einzelnen Filterkörper keine Poren auf. Dadurch sind sie thermisch und mechanisch stabiler.

Alternativ bevorzugt weisen die einzelnen Filterkörper Poren auf der Oberfläche auf. Dadurch kann beispielsweise die chemische Wirkung der Filterkörper durch die vergrößerte Oberfläche verstärkt werden. Vorzugsweise liegt die Porendichte auf der Oberfläche in einem Bereich von 5 bis 1000 Poren / $mm^2$ der Oberfläche.

Die Filterkörper können auf ihrer Oberfläche auch vorzugsweise strukturiert sein (z.B. mit Dimples) oder definierter Struktur und Rauheit. Der Median der Rauheit der Oberfläche der einzelnen Filterkörper liegt vorzugsweise bei wenigstens 5 $\mu$m. Unabhängig davon liegt der Median der Rauheit der einzelnen Filterkörper vorzugsweise bei bis zu 1000 $\mu$m. Die Rauheit kann beispielsweise nach den Empfehlungen aus der DIN EN ISO 25178 mit einem taktilen Profilometer gemessen werden.

Die Oberfläche der Filterkörper kann vorzugsweise auch unregelmäßig oder regelmäßig wiederkehrende Strukturelemente aufweisen, die aus der Oberfläche hervorstehen oder in die Oberfläche vertieft sind. Diese Strukturelemente können jeweils einen Durchmesser in einem Bereich von 10 bis 5000 $\mu$m aufweisen. Unabhängig davon können die Strukturelemente auch einen Abstand zueinander im Median in einem Bereich von 50 bis 5000 $\mu$m aufweisen.

**Weitere Ausführungsformen der Erfindung**

In einer weiteren Ausführungsform wird die der Erfindung zugrunde liegende Aufgabe durch ein Verfahren zur Herstellung der erfindungsgemäßen Filterkörper gelöst, welches dadurch gekennzeichnet ist, dass die Filterkörper mit Hilfe von 3D-Druck, Formpressen, elektrophoretische Abscheidung (EPD), Strangpressen, Walzpressen, Spritzguss oder mit Hilfe von Gießformen hergestellt werden. Besonders bevorzugt können diese Schritte auch miteinander kombiniert oder weitere Verfahrensschritte durchgeführt werden. So kann der erfindungsgemäße Filterkörper beispielsweise durch Strangpressen mit anschließendem Formgebungsschritt wie etwa Biegen und/oder Stanzen hergestellt werden. Insbesondere Filterkörper aus Keramik wie z.B. SiC können beispielsweise mit Hilfe von Keramikspritzguss hergestellt werden. Man kann beispielsweise Holz oder Kunststoffe zu Filterkörpern formen und durch Verkohlung in Kohlenstoff oder kohlenstoffhaltige Materialien überführen.

Ein bevorzugter Aspekt kann die Herstellung der keramischen Filterkörper, insbesondere die der speziell geformten Filterkörper wie Tetra-, Hexa- oder Multipoden sein.

Bevorzugte Herstellungsverfahren sind (i) der 3D-Druck (3D-printing) ausgehend von keramischen Pulvern, (ii) das Formpressen ausgehend von geeigneten Keramikmassen, und (iii) das Walzpressen ausgehend von geeigneten Keramikmassen. Die Verfahrenstechnik beinhaltet in allen Fällen eine geeignete und auf die jeweilige Keramik abgestimmte Sinter-Behandlung der keramischen Grünkörper (Brennen), sowie gegebenenfalls eine geeignete Beschichtung der Filterkörper, ebenfalls unter Nutzung spezifischer, auf den Anwendungsfall zugeschnittener Methoden. Beispielsweise können die Filterkörper nach dem Verfahren aus DE 10 2012 219 989 hergestellt werden.

In einer weiteren Ausführungsform wird die der Erfindung zugrunde liegende Aufgabe durch einen Filter enthaltend mehrere erfindungsgemäße Filterkörper gelöst.

Dadurch, dass der Filter aus einzelnen unabhängigen Filterkörpern besteht, ist der Filter sehr belastbar und robust, kann sich unter Last etwas umordnen oder anders anordnen und so einer großen mechanischen Last, beispielsweise beim Auftreffen des Gießstrahls aus Metallschmelze, leichter widerstehen.

Durch den Aufbau aus einzelnen Filterkörpern kann man die filteraktive Oberfläche des Filters leicht beschichten und so die Eigenschaften des Filters grundlegend ändern, indem man die einzelnen Filterkörper beschichtet. Dies ist bei Ceramic Foam Filters aus keramischem Schaum in dieser Form nicht ohne weiteres möglich.

Vorzugsweise ist der erfindungsgemäße Filter ein Schüttgutfilter.

Vorzugsweise weist der Filter eine Röhre auf, in der die Filterkörper enthalten sind und durch die das Filtrat geleitet wird.

Vorzugsweise weist der Filter alternativ ein Filterbett auf, in dem die Filterkörper enthalten sind.

Vorzugsweise überschneiden sich die Umfangskugeln von wenigstens zwei benachbarten Filterkörpern im erfindungsgemäßen Filter zu wenigstens 10%.

In dem Filter sind die Filterkörper vorzugsweise als Agglomerat enthalten.

Vorzugsweise greifen die einzelnen Filterkörper innerhalb des Filters in benachbarten Filterkörpern ineinander ein. Besonders bevorzugt sind die Filterkörper im erfindungsgemäßen Filter miteinander verhakt oder verschränkt. Dadurch können die auf den Filter wirkenden Kräfte auch seitlich auf die Wände abgeleitet werden.

Die Filterkörper können vorzugsweise eine freitragende Struktur erzeugen, die ohne Begrenzungen wie Wände freitragend ist.

Der durch Schüttung aus einzelnen Filterkörpern hergestellte Filter weist vorzugsweise eine Porosität von 30% bis 80% auf, vorzugsweise von 50 bis 70%. Weiterhin weist der erfindungsgemäße Filter vorzugsweise eine spezifische filteraktive Oberfläche auf, die zielgenau eingestellt werden kann, indem Filterkörper geeigneter Geometrie und Größe verwendet werden. Dabei können alle Filterkörper in der Schüttung dieselbe oder unterschiedliche Größe und Geometrie aufweisen. Die Porosität kann beispielsweise gemäß DIN EN 623-2:1993-11 bestimmt werden.

Der Druckverlust (bzw. Filterwiderstand) des erfindungsgemäßen Filters lässt sich für die jeweils anstehende Filtrationsaufgabe vorzugsweise anpassen, indem die Porosität und die spezifische Oberfläche des Schüttguts nach Maßgabe numerischer Simulationen oder anderer Modellrechnungen gezielt eingestellt werden.

Die Permeabilität des erfindungsgemäßen Filters lässt sich für die jeweils anstehende Filtrationsaufgabe vorzugsweise anpassen, indem die Porosität und die spezifische Oberfläche des Schüttguts nach Maßgabe numerischer Simulationen oder anderer Modellrechnungen gezielt eingestellt werden.

Vorzugsweise ist der erfindungsgemäße Filter ein Gießfilter.

Im Unterschied zum Stand der Technik ist der erfindungsgemäße Filter kein poröser Festkörper, sondern vorzugsweise ein durch Schüttung aufgebautes dreidimensionales Netzwerk aus kleinen, filteraktiven Filterkörpern, die sich gegenseitig stützen und stabilisieren, derart, dass eine Packung (Schüttung) mit geeigneter Permeabilität entsteht. Die Schüttung oder die Filterkörper wird/werden vorzugsweise von einem geeigneten Rückhaltesieb gehalten, das vorzugsweise im Anguss-System eingelegt ist. Dieses Sieb verhindert auch, dass die filteraktiven kleinen Filterkörper in das Gussteil eingetragen werden.

Eine bevorzugte Ausführung der Erfindung sieht vor, dass die kleinen Filterkörper zwischen zwei Sieben aufgeschüttet vorliegen, also das Schüttgut fixiert ist und sich die filteraktiven Filterkörper nicht aus dem losen dreidimensionalen Netzwerk lösen können, und demnach nicht im Schmelzestrom bewegen. Eine weitere Ausführung der Erfindung sieht vor, dass das Schüttgut vorzugsweise nur von einem geeigneten Rückhaltesieb gehalten wird, sonst aber frei vorliegt, so dass sich filteraktive Filterkörper aus dem dreidimensionalen Netzwerk loslösen und im Schmelzestrom bewegen können, bevor sie sich schließlich wieder im Schüttgut sammeln.

Vorzugsweise sind die kleinen Filterkörper in einer (beispielsweise geeignet dimensionierten) Kartusche, die ihrerseits poröse Wände haben kann, eingebracht oder darin eingekapselt, wobei die Wände der Kartusche vorzugsweise plattenähnlich starr oder gewebeähnlich strukturiert, also verformbar sein können. Vorzugsweise kann sich die Kartusche auch auflösen. Dies hat den Vorteil, dass sie dann der Chargierung der Filterkörper dienen kann, aber den Filtervorgang nicht beeinträchtigt.

In einer weiteren Ausführungsform wird die der Erfindung zugrunde liegende Aufgabe durch ein Verfahren zur Filtration gelöst, bei dem das zu filternde Fluid durch den erfindungsgemäßen Filter geleitet wird.

Vorzugsweise handelt es sich um die Filtration von Metallschmelzen.

Vorzugsweise werden beim erfindungsgemäßen Verfahren zur Filtration filteraktive Filterkörper auch bereits vor dem Abguss der Schmelze zugegeben und erst beim Gießen vom Rückhaltesieb zurückgehalten. Dadurch ist die Kontaktzeit zwischen der Schmelze und den filteraktiven Körpern länger und der chemisch reaktive Aspekt der Filtrationswirkung wird verstärkt.

Vorzugsweise liegt die Temperatur der Metallschmelzen bei wenigstens 600 °C.

Vorzugsweise sind die kleinen Filterkörper in einer geeignet dimensionierten Kartusche, die ihrerseits beispielsweise poröse Wände hat, eingebracht oder darin eingekapselt, wobei die Wände der Kartusche vorzugsweise plattenähnlich starr oder gewebeähnlich weich, also verformbar sind.

In einer weiteren Ausführungsform wird die der Erfindung zugrunde liegende Aufgabe durch die Verwendung der erfindungsgemäßen Filterkörper zur Filtration gelöst.

In einer weiteren Ausführungsform wird die der Erfindung zugrunde liegende Aufgabe durch ein Verfahren zur Regeneration der erfindungsgemäßen Filterkörper gelöst, welches dadurch gekennzeichnet ist, dass die Filterrückstände und/oder der Filterkuchen aus dem erfindungsgemäßen Filter oder von den erfindungsgemäßen Filterkörpern entfernt wird.

Die Erfindung wird im Folgenden anhand von bevorzugten Ausführungsbeispielen unter Bezugnahme auf Figuren einer schematischen Zeichnung näher erläutert.

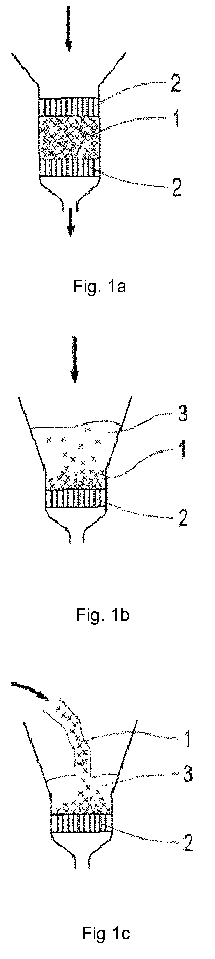

Fig. 1a     Prinzipbild des Schüttgutfilters mit den Filterkörpern 1 zwischen zwei Siebebenen 2

Fig. 1b     Schüttgutfilter mit frei beweglichen Partikeln bzw. Filterkörpern 1 im Gießtrichterbereich

Fig. 1c     Schüttgutfiltration mit Zugabe des filteraktiven Schüttgutes bzw. der Filterkörper 1 in den Tiegel

Der Pfeil gibt in diesen Figuren jeweils die Richtung an, aus der der Gießstrahl des Filtrats bzw. der Schmelze 3 auf den Schüttgutfilter bzw. die Filterkörper 1 trifft, die von einem Sieb 2 gehalten werden.

Fig. 2 zeigt eine Schüttung aus Hexapoden als Filterkörper 1.

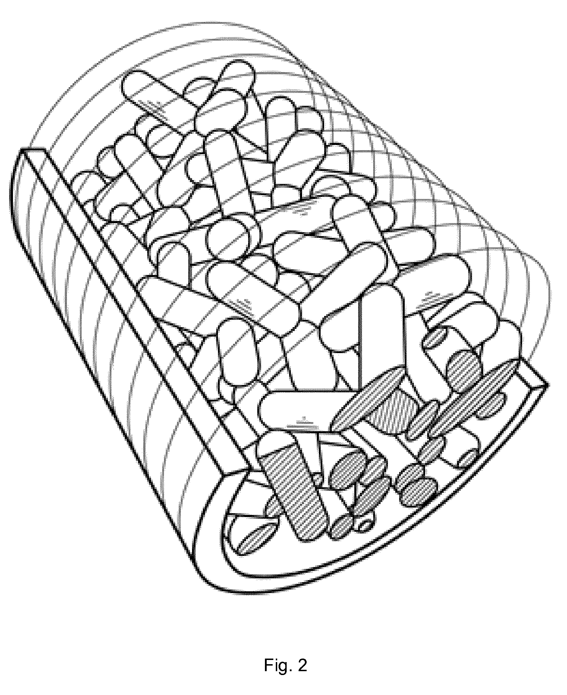

Ein Beispiel für die Struktur eines Schüttgutfilters zeigt Fig. 2 anhand einer computertomographischen Aufnahme (Röntgenstrahlen-Tomographie): Es handelt sich um eine Schüttung aus Hexapod-Filterkörpern 1, die für die tomographische Aufnahme in ein kleines Rohr, Durchmesser 5 mm, gefüllt wurden.

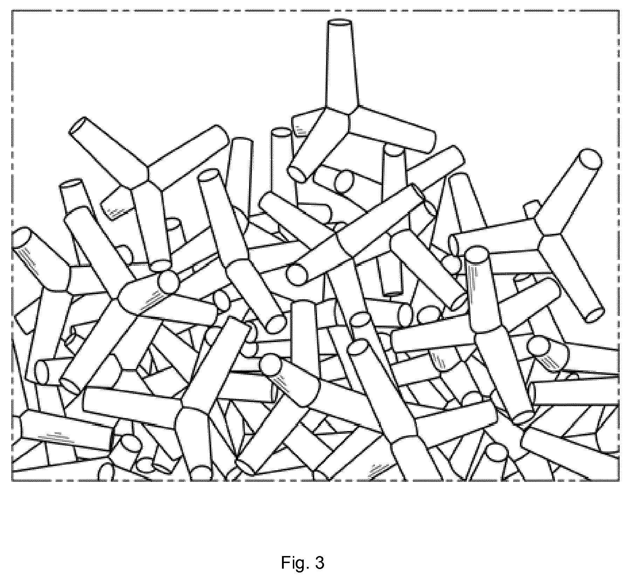

Fig. 3 schließlich zeigt eine Schüttung aus Tetrapoden als Filterkörper 1, die hier in einer Simulation dargestellt sind.

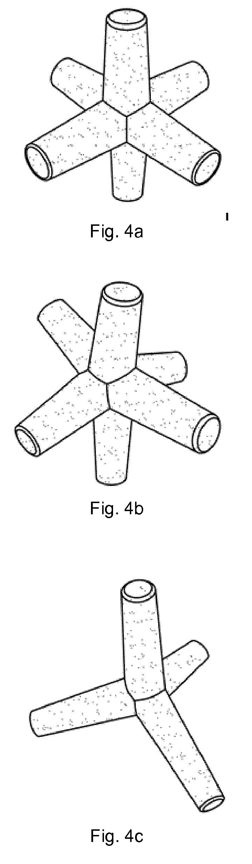

Fig. 4a zeigt einen rechtwinkligen Hexapoden als Filterkörper;

Fig. 4b zeigt einen unregelmäßigen Hexapoden als Filterkörper;

Fig. 4c zeigt einen Tetrapoden als Filterkörper.

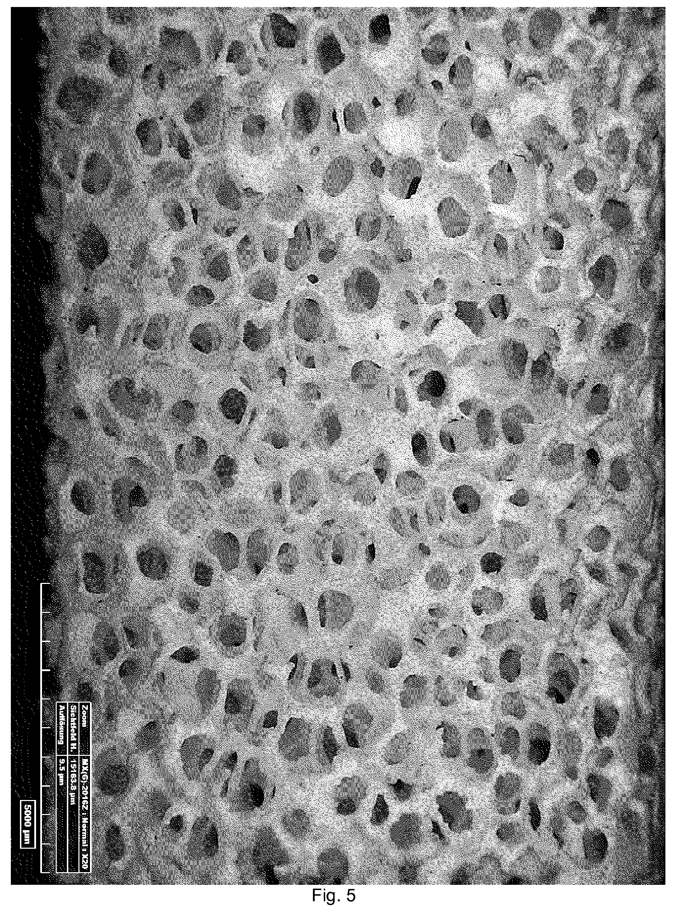

Fig. 5 zeigt eine lichtmikroskopische Aufnahme eines Ceramic Foam Filters aus dem Stand der Technik (30 ppi) in 20facher Vergrößerung. Der Maßstab am Rand des Bildes ist 5 mm lang.

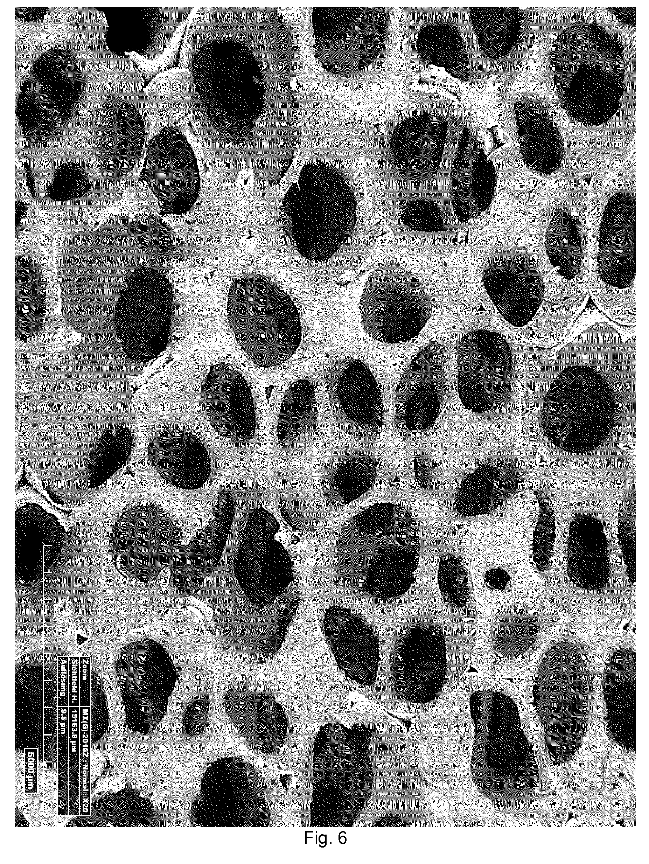

Fig. 6 zeigt eine lichtmikroskopische Aufnahme eines Ceramic Foam Filters aus dem Stand der Technik (10 ppi) in 20facher Vergrößerung. Der Maßstab am Rand des Bildes ist 5 mm lang.

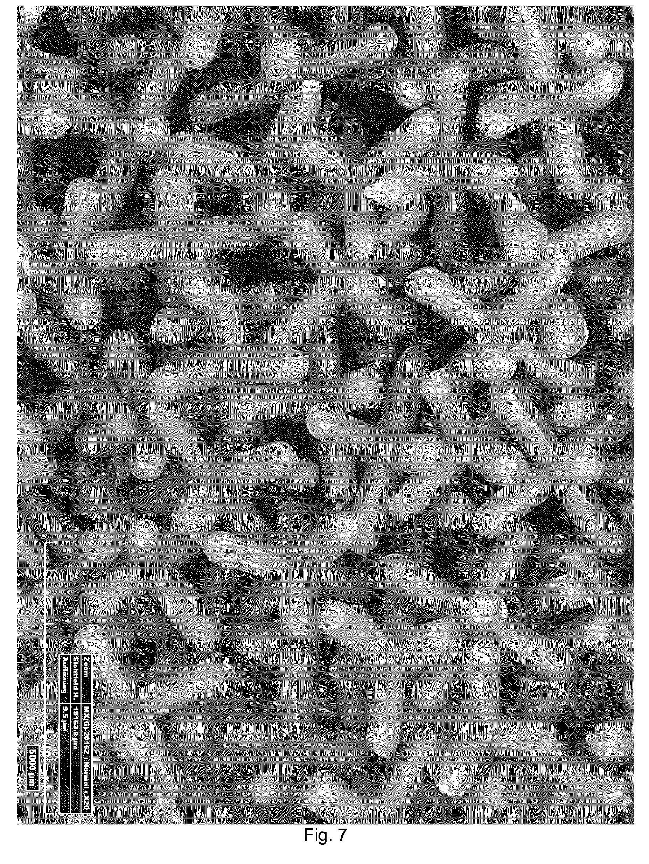

Fig. 7 zeigt eine lichtmikroskopische Aufnahme der erfindungsgemäßen Hexapoden in 20facher Vergrößerung. Der Maßstab am Rand des Bildes ist 5 mm lang.

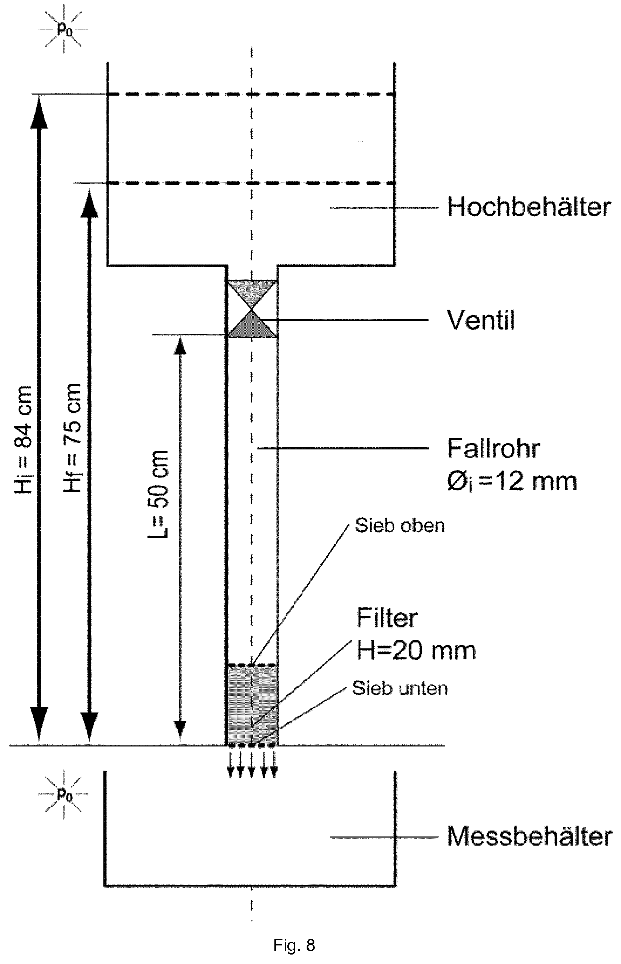

Fig. 8 zeigt den Versuchsaufbau der im untenstehenden konkreten Ausführungsbeispiel.

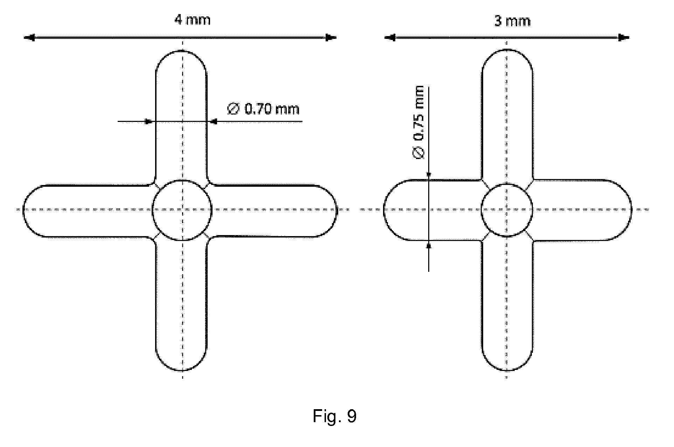

Fig. 9 zeigt schematisch die Größe der verwendeten Hexapoden.

**Weitere bevorzugte Aspekte der Erfindung:**

*Bevorzugter Aspekt:* Verfahren zur Filtration metallischer Schmelzen mit Hilfe eines Schüttgutfilters, der aus einer Vielzahl kleiner, filteraktiver Körpern besteht, die sich in der Schüttung gegenseitig stützen und stabilisieren und dadurch ein dreidimensionales, permeables Netzwerk bilden, durch das die metallische Schmelze beim Eingießen in die zu füllende Form fließt und dabei durch den Kontakt mit den filteraktiven Körpern der Schüttung von nichtmetallischen Einschlüssen oder Verunreinigungen gesäubert wird.

*Bevorzugter Aspekt:* Verfahren zur Filtration metallischer Schmelzen nach dem vorherigen Aspekt, dadurch gekennzeichnet, dass die filteraktiven Körper als Schüttung zwischen zwei Rückhaltesieben fixiert sind, und so im Gießsystem eingebracht sind.

*BevorzugterAspekt:* Verfahren zur Filtration von metallischen Schmelzen nach den vorherigen Aspekten, dadurch gekennzeichnet, dass die filteraktiven Körper als lose Schüttung in einem Rückhaltesieb vorliegen, das im Gießsystem eingebracht und fixiert ist, wobei eine freie Bewegung der filteraktiven Körper im Schmelzbad oberhalb des Rückhaltefilters möglich ist und somit einen intensiven Kontakt zwischen der Schmelze und den filteraktiven Körpern ermöglicht.

*BevorzugterAspekt:* Verfahren zur Filtration von metallischen Schmelzen nach den vorherigen Aspekten, dadurch gekennzeichnet, dass die filteraktiven Körper als lose Schüttung bereits vor oder beim Abguss in den Gießtiegel oder in den Gießweg eingebracht werden und sich frei im Schmelzevolumen bewegen, bis sie schließlich beim Formfüllen während des Gießvorgangs im Rückhaltesieb des Gießsystems zurückgehalten werden.

*Filterkörper,* dadurch gekennzeichnet, dass sie aus einem temperaturbeständigen Material gefertigt sind, dessen Schmelzpunkt deutlich höher als der der Schmelze liegt und die aufgrund ihrer Größe, Form und Beschaffenheit eine permeable Schüttung erzeugen, die filteraktiv wirkt. Der Begriff "filteraktiv" umfasst hier die Summe aller physikalischen und chemischen Wechselwirkungen, die dazu führen, dass nichtmetallische Verunreinigungen aus der metallischen Schmelze im Schüttgutfilter verbleiben, also nicht in die Gießform eingetragen werden.

*Bevorzugter Aspekt:* Filterkörper nach dem vorherigen Aspekt, dadurch gekennzeichnet, dass sie aus einem temperaturbeständigen und thermoschockbeständigen keramischen Material bestehen, welches nicht mit der Schmelze reagiert, aber gezielt, entweder integral oder nur in oberflächennahen Bereichen, mit reaktiven Substanzen versetzt ist, um eine chemische Wechselwirkung mit den nichtmetallischen Verunreinigungen (Einschlüssen) aus der Schmelze einzugehen und diese durch Chemisorption und/oder andere molekulare Wechselwirkungskräfte an sich zu binden.

*Bevorzugter Aspekt:* Filterkörper nach den vorherigen Aspekten, dadurch gekennzeichnet, dass sie eine Größe (Durchmesser der Umkugel) von 1mm bis 20mm haben und dass ihre Form entweder regellos ist oder besondere geometrische Merkmale aufweist, z.B. Tetra-, Hexa-, oder Multipoden, auf deren Grundlage die Permeabilität der Schüttung und die spezifische freie Oberfläche im Schüttgut gezielt eingestellt werden können.

*Bevorzugter Aspekt: Verfahren zur Herstellung filteraktiver Körper,* dadurch gekennzeichnet, dass sie durch die endkonturnahe Fertigung speziell geformter kleiner Filterkörper wie Tetra-, Hexa- oder Multipoden, durch 3D-Druck (3D-printing) ausgehend von keramischen Pulvern, durch Formpressen, Strangpressen oder durch Walzpressen geeigneter keramischer Pasten oder Massen hergestellt werden.

*Bevorzugter Aspekt:* Verfahren nach dem vorherigen Aspekt, dadurch gekennzeichnet, dass die in vorangehenden Aspekten genannten filteraktiven Körper im 3D-Druck ausgehend von keramischen Pulvern und chemisch aktiven Komponenten gefertigt werden.

*Bevorzugter Aspekt:* Verfahren nach den vorherigen Aspekten, dadurch gekennzeichnet, dass die in vorangehenden Aspekten genannten filteraktiven Körper durch Strangpressen oder Walzpressen ausgehend von geeigneten keramischen Pasten oder Massen gefertigt werden.

*Bevorzugter Aspekt:* Verfahren nach den vorherigen Aspekten, dadurch gekennzeichnet, dass die in vorangehenden Aspekten genannten filteraktiven Körper auch als Mischung verschiedener Körper und/oder als Mischung von Körpern mit unterschiedlicher Beschaffenheit oder Oberflächenbehandlung oder Größe vorliegen können, beispielsweise auch als Mischung von Kugeln und Multipoden oder beliebigen anderen Kombinationen, mit dem Ziel, ein für die jeweilige Schmelze optimales Filterergebnis zu erreichen.

Ausführungsbeispiel

Versuch 1: Analyse einer Hexapodenschüttung im Computer-Tomographen (X-CT)

Eine Schüttung bestehend aus kleinen Hexapoden, die zunächst für Modellzwecke aus Kunststoff hergestellt wurden (Zeichnung siehe Fig. 9) wurde erzeugt, indem die Hexapoden in ein Rohr des Innendurchmessers 7 mm geschüttet wurden und in dem Rohr geschüttelt wurden, bis ein möglichst dichter Packungsgrad erreicht war.

Das Schüttgut im Rohr wurde mit Hilfe eines Computer-Tomographen gescannt, um die dreidimensionale Struktur der Schüttung zu erfassen und messtechnisch zu analysieren. Die nominelle Auflösung betrug dabei 5.7 $\mu$m. Das gescannte Volumen wurde auf 6.5 mm beschnitten, um sicherzustellen, dass Artefakte, die sich in der Nähe der Rohrwand ergeben, nicht in die weitere Analyse der Schüttung eingehen.

Das so bereinigte Volumen wurde bzgl. der charakteristischen Merkmale der Schüttung, (i) Porosität $\varepsilon$ und (ii) spezifische Oberfläche Ac, ausgewertet. Die folgende Tabelle fasst die Ergebnisse zusammen.

| Hexapoden | Einheit | Größe der Hexapoden (größte Länge mm) | | |
|---|---|---|---|---|
| | | 4 mm | 8 mm | 12 mm |
| X-CT Auflösung (nominell) | $\mu$m/pixel | 5.7 | 11.4 | 17.2 |
| Porosität $\varepsilon$ | - | 0.582 | 0.585 | 0.585 |
| Spezifische Oberfläche Ac | $m^2/m^3$ | 2410 | 1190 | 795 |

Die Tabelle enthält auch Messergebnisse für zwei andere Schüttungen mit größeren Hexapoden (8mm und 12 mm). Diese Daten wurden erhalten, indem die experimentelle Schüttung (4 mm) um den Faktor 2 bzw. Faktor 3 skaliert wurde bevor die Werte für $\varepsilon$ und Ac erneut gemessen wurden. Durch die Skalierung ändert sich auch jeweils die Auflösung und damit die Genauigkeit der Angaben, wobei selbst die gröbste Auflösung mit der von Regulski et al. verwendeten Auflösung zur X-CT Analyse von Schaumkeramiken vergleichbar ist (25 bis 45 $\mu$m).

Die gemessenen Kenngrößen der Hexapoden-Schüttungen werden nachfolgend mit Literaturdaten zur Porosität $\varepsilon$ und spezifischen Oberfläche Ac von schaumkeramischen Filtern (Regulski 2015) verglichen, sowie mit denen von Kugelschüttungen.

Hexapoden-Schüttungen (wie vorstehende Tabelle)

| Hexapoden | Einheit | 4 mm | 8 mm | 12 mm |
|---|---|---|---|---|
| Porosität $\varepsilon$ | - | 0.582 | 0.585 | 0.585 |
| Spezifische Oberfläche Ac | $m^2/m^3$ | 2412 | 1193 | 795 |

Schaumkeramische Filter (Regulski et al. 2015)

| SiC-Filter | Einheit | 30 ppi | 20 ppi | 10 ppi |
|---|---|---|---|---|
| Porosität $\varepsilon$ | - | 0.787 | 0.751 | 0.777 |
| Spezifische Oberfläche Ac | $m^2/m^3$ | 1362 | 1075 | 722 |

Kugelschüttungen (berechnete Werte nach Modellen aus der Literatur)

| Kugel, irreguläre Packung | Einheit | 2.6 mm | 3.5 mm | 5.0 mm |
|---|---|---|---|---|
| Porosität $\varepsilon$ | - | 0.430 | 0.430 | 0.430 |
| Spezifische Oberfläche Ac | $m^2/m^3$ | 1302 | 977 | 684 |

Der Vergleich zeigt, dass die Porosität der experimentell erzeugten Hexapodenschüttung mit $\varepsilon$ =0.58 die typischen Werte für Schaumkeramik nicht ganz erreicht, aber schon sehr gut ist. Bei Bedarf ist eine weitere Erhöhung der Porosität um 10% realisierbar, indem die Geometrie der Hexapoden (Aspektverhältnis) geringfügig verändert wird, und /oder indem Tetra- statt Hexapoden eingesetzt werden. Der Vergleich zeigt auch, dass die spezifische Oberfläche der experimentell erzeugten Hexapodenschüttung die typischen Werte für schaumkeramische Filter erreicht.

Erstmalig konnten also in einem Schüttgut Merkmale erreicht werden, die bisher den schaumkeramischen Filtern vorbehalten waren. Gleichzeitig besteht nun neuer Gestaltungsspielraum, um gezielt jeden beliebigen Zustand ($\varepsilon$, Ac) zwischen Kugelschüttung und Schaumkeramik zu erzeugen.

**Versuch 2: Durchflussmessungen im Labormaßstab mit Wasser als Modellsubstanz**

Eine kleine Versuchsreihe wurde im Labormaßstab durchgeführt, um die Permeabilität (Durchfließbarkeit) einer Hexapodenschüttung im Vergleich mit andern Filtern zu testen. Die Versuche erfolgten mit Wasser, welches als Medium für die Filtercharakterisierung auch für Gießfilter üblich ist. Der Versuchsaufbau ist schematisch in Fig. 8 dargestellt. Es handelt sich um einen einfachen Aufbau mit einem unten offenen Fallrohr, in das der zu testende Filter eingelegt (eingeschüttet) wird, so dass er zwischen zwei groben Sieben festgehalten wird. Das untere Sieb verschließt das Fallrohr. Am oberen Ende ist das Fallrohr mit einem Ventil luft- und wasserdicht verbunden, das seinerseits luft- und wasserdicht am Ausfluss eines Hochbehälters befestigt ist. Der Hochbehälter ist ein einfaches Wasserreservoir. Er wurde vor jedem Versuch bei geschlossenem Ventil mit 7 Litern Wasser befüllt (Füllstand Hi=84 mm) und leerte sich nach Öffnen des Ventils während eines Versuchs bis auf den neuen Pegelstand (Hf=75 mm). Die entsprechende Wassermenge, die während eines Versuchs ausfließt, betrug 4 Liter. Sie wurde im unteren Messbehälter aufgefangen und genau nachgemessen. Im Versuch wurde die Zeit gemessen, die nötig war, um 4 Liter Wasser durch den Filter fließen zu lassen.

Folgende Filter wurden getestet:

| Filter Nr. | Filter (Höhe 20 mm, Ø12mm) |
|---|---|
| 1 | Leerlauf mit 2 Sieben |
| 2 | Kugeln 2.6 mm |
| 3 | Kugeln 3.5 mm |
| 4 | PVC-Schwamm grob |
| 5 | PVC-Schwamm mittel |
| 6 | PVC-Schwamm fein |
| 7 | Hexapoden 4 mm (A) |
| 8 | Keramikfilter 10 ppi |
| 9 | Keramikfilter 30 ppi |
| 10 | Hexapoden 4 mm (B) |

PVC- Schäume sind die Vorläufer der schaumkeramischen Filter mit Porositäten nahe $\varepsilon$ =0.9 und werden hier nicht näher diskutiert.

Schaumkeramische Filter waren nur in den Ausführungen 10 ppi und 30 ppi (lineare Porendichte) vorrätig und passen nicht genau zu den verfügbaren Hexapoden, insofern ist kein 1:1 Vergleich möglich.

Die nachfolgende Tabelle fasst die Experimentergebnisse zusammen. Jeder Versuch wurde drei Mal durchgeführt (V1, V2, V3) und die Hexapodenschüttung wurde zwei Mal getestet (Nr. 7 und Nr. 10). Ein Referenzversuch ohne Filter, aber mit den beiden grobmaschigen Sieben, wurde ebenfalls durchgeführt.

| Filter Nr. | Filter (Höhe 20 mm, Ø12mm) | Durchflussmenge | Zeit, Sekunden | | |
|---|---|---|---|---|---|
| | | | V1 | V2 | V3 |
| 1 | Leerlauf mit 2 Sieben | 4 Liter | 37 | 39 | 37,5 |
| 2 | Kugeln 2.6 mm | 4 Liter | 109 | 105 | 106 |
| 3 | Kugeln 3.5 mm | 4 Liter | 94 | 95 | 93 |
| 4 | PVC-Schwamm grob | 4 Liter | 45,2 | 46 | 46 |
| 5 | PVC-Schwamm mittel | 4 Liter | 47,0 | 45,6 | 46 |
| 6 | PVC-Schwamm fein | 4 Liter | 64,0 | 62,6 | 63 |
| 7 | Hexapoden 4 mm (A) | 4 Liter | 57,9 | 61,3 | 59 |
| 8 | Keramikfilter 10 ppi | 4 Liter | 46,5 | 46,8 | 47 |
| 9 | Keramikfilter 30 ppi | 4 Liter | 100 | 97 | 97 |
| 10 | Hexapoden 4 mm (B) | 4 Liter | 59 | 58 | 58 |

Die Messwerte zeigen, dass der getestete Hexapodenfilter (Schüttung wie aus Versuch 1) ein geringeres Durchflussvermögen zeigt als ein schaumkeramischer Filter mit 10 ppi linearer Porendichte und ein besseres als schaumkeramische Filter mit 30 ppi. Die untersuchte Hexapodenschüttung verhielt sich bezüglich der Durchlässigkeit (Permeabilität) in etwa wie ein 20 ppi schaumkeramischer Filter, hatte aber eine rund doppelt so hohe spezifische Oberfläche, siehe nachfolgende Tabelle:

| Filterkenngrößen | Einheit | Hexapoden 4 mm | Schaumkeramik 20 ppi |
|---|---|---|---|
| Porosität $\varepsilon$ | - | 0.582 | 0.751 |
| Spezifische Oberfläche Ac | $m^2/m^3$ | 2412 | 1075 |

Umgekehrt bedeutet dies, dass die Reibungsverluste in der untersuchten Hexapodenschüttung rund 50% geringer sind als in einem keramischen Schaumfilter mit gleicher spezifischer Oberfläche, zumindest in den vorliegenden Testbedingungen. Dieses Ergebnis ist zum Teil der Tatsache geschuldet, dass das Material der verwendeten Modell-Hexapoden (Kunststoff) nicht die gleichen Reibungsverluste erzeugt wie keramisches Material. Dieser Anteil wird auf höchstens 10% der Reibungsverluste geschätzt.

Durch Anpassungen des Multipodendesigns und gegebenenfalls mittels zusätzlicher Funktionalisierung der Multipoden-Oberflächen ist es möglich, die Durchströmung (Permeabilität) gezielt einzustellen und für die jeweils gegebene Filtrationsaufgabe zu optimieren.

**Vergleich zum Stand der Technik**

Ceramic Foam Filters wurde von Regulski im Jahr 2015 näher untersucht (vgl. W. Regulski et al., Pressure drop in flow across ceramic foams-A numerical and experimental study, Chemical Engineering Science137,(2015), 320-337). Die nachfolgende Tabelle zeigt Kerneigenschaften von üblichen Ceramic Foam Filters. PPI sind Poren pro Inch (pores per inch, ppi), was eine typische Kenngröße für Filter für Metallschmelzen ist. X-CT Volumen bezeichnet die Größe des im Computer-Tomographen (X-CT) gescannten Volumens, Integrale Porosität ist die Porosität als Volumenanteil von 1 über das Filtermaterial (Beispiel: 0,777 entspricht 77,7 Vol.%). Die spezifische Oberfläche ist die des Filtermaterials.

Table 1: Characteristic structure data for ceramic foam filters [Regulski 2015].

| Ceramic Foam Filter | X-CT Volumen Lx x Ly x Lz, mm | X-CT Auflösung, $\mu m$ | Integrale Porosität $\varepsilon$, Anteil | Spezifische Oberfläche ac, $m^2/m^3$ |
|---|---|---|---|---|
| 10 ppi | 30.41x 30.41 x36.20 | 45.252 | 0.777 | 721.5 |
| 20 ppi | 30.41 x30.41 x36.20 | 45.252 | 0.751 | 1075.0 |

(fortgesetzt)

| Ceramic Foam Filter | X-CT Volumen Lx x Ly x Lz, mm | X-CT Auflösung, $\mu$m | Integrale Porosität $\varepsilon$, Anteil | Spezifische Oberfläche ac, $m^2/m^3$ |
|---|---|---|---|---|
| 30 ppi | 16.80 x16.80 x20.00 | 25.000 | 0.787 | 1361.7 |

Zum Vergleich weist der im Experiment 1 untersuchte, erfindungsgemäße Schüttgutfilter folgende Charakteristika auf:

| Erfindungsgemäßer Schüttgutfilter* | X-CT Volumen Ø, L, mm | X-CT Auflösung, $\mu$m | Integrale Porosität $\varepsilon$, Anteil | Spezifische Oberfläche ac, $m^2/m^3$ |
|---|---|---|---|---|
| Hexapoden Größe12 mm | Ø=19,5 L =27.0 | 17,2 | 0,585 | 795 |
| Hexapoden Größe 8 mm | Ø=13 L =18 | 11.4 | 0.585 | 1193 |
| Hexapoden Größe 4 mm | Ø=6.5 L =9.0 | 5.7 | 0.582 | 2412 |
| *die verwendeten Hexapoden (4mm) sind in Fig. 9 dargestellt, die andern Größen sind 2x bzw. 3x größer, wobei alle Maße gleichmäßig skaliert wurden. | | | | |

An diesem Vergleich kann leicht gesehen werden, dass die Eigenschaften der Filter vergleichbar sein können. Der Vorteil der erfindungsgemäßen Filter ist beispielsweise die beliebige Form, die der Filter annehmen kann. Bei vergleichbarer Porosität ist zudem die Permeabilität bei den erfindungsgemäßen Filtern wesentlich höher, da der Hohlraum im Filter weniger gewunden (tortuosity) ist als im Ceramic Foam Filter. Dadurch ist auch der Druckabfall im erfindungsgemäßen Filter wesentlich geringer, wodurch durch die erfindungsgemäßen Filter wesentlich dickere Filterbetten ermöglichen.

Mit den erfindungsgemäßen Filterkörpern können Eigenschaften erzielt werden, die mit anderen üblichen Filterkörpern wie Kugeln nicht erzielt werden können:

| Kugeln als Filterkörper | Kugeldurchmesser, mm | Integrale Porosität $\varepsilon$, Anteil | Spezifische Oberfläche ac, $m^2/m^3$ |
|---|---|---|---|
| 1. | 14.22 | 0.44 | 240.5 |
| 2. | 9.48 | 0.44 | 360.8 |
| 3. | 4.20 | 0.44 | 721.0 |

Beispiel: Packung von Kugeln als Filterkörper

Die in der vorliegenden Beschreibung, den Zeichnungen sowie den Ansprüchen offenbarten Merkmale der Erfindung können sowohl einzeln, als auch in beliebigen Kombinationen für die Verwirklichung der Erfindung in ihren verschiedenen Ausführungsformen wesentlich sein.

**Bezugszeichen**

1    Filteraktives Schüttgut, Filterkörper
2    Siebebene, Sieb, Rückhaltesieb
3    Schmelze, Filtrat

**Patentansprüche**

1. Filterkörper (1) für einen Schüttgutfilter, **dadurch gekennzeichnet, dass** der Filterkörper (1) ein Volumen in einem Bereich von 5 bis 20.000 mm3 aufweist und der Filterkörper (1) nicht kugelförmig ist.

2. Filterkörper (1) **dadurch gekennzeichnet, dass** sie aus einem temperaturbeständigen Material gefertigt sind, dessen Schmelzpunkt deutlich höher als der der Schmelze (3) liegt und die aufgrund ihrer Größe, Form und Beschaffenheit, eine permeable Schüttung erzeugen, die filteraktiv wirkt, wobei der Begriff "filteraktiv" hier die Summe aller physikalischen und chemischen Wechselwirkungen umfasst, die dazu führen, dass nichtmetallische Verunreinigungen aus der metallischen Schmelze (3) im Schüttgutfilter verbleiben und also nicht in die Gießform eingetragen werden.

3. Filterkörper (1) nach einem der Ansprüche 1 oder 2, **dadurch gekennzeichnet, dass** die Oberfläche der einzelnen Filterkörper (1) im Median in einem Bereich von 10 bis 10.000 mm$^2$ liegt.

4. Filterkörper (1) nach einem der Ansprüche 1 bis 3, **dadurch gekennzeichnet, dass** das Material der Filterkörper (1) polykristallin oder amorph ist.

5. Filterkörper (1) nach einem der Ansprüche 1 bis 4, **dadurch gekennzeichnet, dass** die Form der einzelnen Filterkörper (1) einen zentralen Mittelkörper und wenigstens drei daraus hervorstehende Auswölbungen, insbesondere Beine, aufweist.

6. Filterkörper (1) nach einem der Ansprüche 1 bis 5, **dadurch gekennzeichnet, dass** die Umfangskugel der einzelnen Filterkörper (1) im Median einen Durchmesser im Bereich von 1 bis 60 mm, besonders bevorzugt in einem Bereich von 4 bis 30 mm aufweist.

7. Filterkörper (1) nach einem der Ansprüche 1 bis 6, **dadurch gekennzeichnet, dass** das Verhältnis der Oberfläche zu Volumen der einzelnen Filterkörper (1) im Median kleiner 5 ist.

8. Filterkörper (1) nach einem der Ansprüche 1 bis 7, **dadurch gekennzeichnet, dass** die einzelnen Filterkörper (1) die Form Tetrapod, Hexapod oder Octopod aufweisen.

9. Filterkörper (1) nach einem der Ansprüche 1 bis 8, **dadurch gekennzeichnet, dass** die Filterkörper zu wenigstens 50 Gew.%, insbesondere zu wenigstens 90 Gew.% bis 100 Gew.%, aus einem anorganischen Material bestehen das zur Klasse der Oxide, Karbide, Nitride oder Boride gehört.

10. Filterkörper (1) nach einem der Ansprüche 1 bis 9, **dadurch gekennzeichnet, dass** die einzelnen Filterkörper (1) keine Poren aufweisen, wohl aber an der Oberfläche zufällige oder regelmäßige Strukturen aufweisen können.

11. Verfahren zur Herstellung der Filterkörper (1) gemäß einem der Ansprüche 1 bis 10, **dadurch gekennzeichnet, dass** die Filterkörper (1) mit Hilfe von 3D-Druck, Formpressen, elektrophoretische Abscheidung, Strangpressen, Walzpressen, Spritzguss oder mit Hilfe von Gießformen hergestellt werden.

12. Filter enthaltend Filterkörper (1) gemäß einem der Ansprüche 1 bis 10.

13. Verfahren zur Filtration, bei dem das zu filternde Fluid (3) durch den Filter gemäß Anspruch 12 geleitet wird.

14. Verfahren gemäß Anspruch 13, **dadurch gekennzeichnet, dass** die Filterkörper (1) von einem geeigneten Rückhaltesieb (2) gehalten werden.

15. Verwendung der Filterkörper (1) gemäß einem der Ansprüche 1 bis 10 zur Filtration.

16. Verfahren zur Regeneration der Filterkörper (1) gemäß einem der Ansprüche 1 bis 10, **dadurch gekennzeichnet, dass** die Filterrückstände und/oder der Filterkuchen aus dem Filter gemäß Anspruch 12 oder von den Filterkörpern (1) gemäß einem der Ansprüche 1 bis 10 entfernt wird.

Fig. 1a

Fig. 1b

Fig 1c

Fig. 2

Fig. 3

Fig. 4a

Fig. 4b

Fig. 4c

Fig. 5

Fig. 6

Fig. 7

Hochbehälter

Ventil

Fallrohr
$\varnothing_i$ =12 mm

Sieb oben

Filter
H=20 mm

Sieb unten

Messbehälter

$H_i$ = 84 cm

$H_f$ = 75 cm

L= 50 cm

$p_0$

$p_0$

Fig. 8

4 mm

3 mm

∅ 0.70 mm

∅ 0.75 mm

Fig. 9

Europäisches Patentamt
European Patent Office
Office européen des brevets

## EUROPÄISCHER RECHERCHENBERICHT

Nummer der Anmeldung

EP 16 15 7676

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 203 04 846 U1 (POEHLING ALBERT [DE]) 6. Mai 2004 (2004-05-06)<br><br>* Absatz [0004] - Absatz [0011] *<br>* Abbildung 1 *<br>----- | 1-4,6,7, 9,10, 12-16 | INV.<br>B22C9/08<br>B01D39/16 |
| X | Gawu Green Technology: "Technische Daten Quarzsand / Quarzkies", ,<br>10. Mai 2012 (2012-05-10), XP002770395,<br>Gefunden im Internet:<br>URL:https://web.archive.org/web/2012051005 0623/http://www.wasseraufbereitungsseiten. de/daten_quarzsand.htm<br>[gefunden am 2016-08-23]<br>* das ganze Dokument *<br>----- | 1-4,6,7, 9,10, 12-16 | |
| X | Euroquarz GmbH: "Produktdatenblatt Aquagran - trocken", ,<br>21. August 2015 (2015-08-21), XP002770396,<br>Gefunden im Internet:<br>URL:http://www.euroquarz.de/uploads/tx_dat asheetoverview/AG_5_6-8_0mm_11_fe.pdf<br>[gefunden am 2016-08-23]<br>* das ganze Dokument *<br>----- | 1-4,6,7, 9,10, 12-16 | RECHERCHIERTE SACHGEBIETE (IPC)<br><br>B22C<br>B01D |
| X | WO 2013/086550 A2 (CERATIZIT AUSTRIA GMBH [AT]) 20. Juni 2013 (2013-06-20)<br><br>* Abbildungen 1-4 *<br>* Seite 1, Zeile 3 - Zeile 5 *<br>* Seite 2, Zeile 6 - Seite 12, Zeile 11 *<br>----- | 1-4,6,7, 9,10, 12-16 | |
| A | EP 0 490 371 A2 (ALUMINUM CO OF AMERICA [US]) 17. Juni 1992 (1992-06-17)<br>* das ganze Dokument *<br>-----<br>-/-- | 1-16 | |

Der vorliegende Recherchenbericht wurde für alle Patentansprüche erstellt

| Recherchenort | Abschlußdatum der Recherche | Prüfer |
|---|---|---|
| München | 22. Mai 2017 | Zimmermann, Frank |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**Europäisches Patentamt**
**European Patent Office**
**Office européen des brevets**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 3 737 304 A (BLAYDEN L ET AL) 5. Juni 1973 (1973-06-05) * das ganze Dokument * ----- | 1-16 | |
| A | DE 102 01 357 A1 (ANEZIRIS C G [DE]; MELZER DIETER [DE]) 7. August 2003 (2003-08-07) * das ganze Dokument * ----- | 1-16 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 22. Mai 2017 | Zimmermann, Frank |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes
Dokument

EPO FORM 1503 03.82 (P04C03)

Seite 2 von 2

**ANHANG ZUM EUROPÄISCHEN RECHERCHENBERICHT**
**ÜBER DIE EUROPÄISCHE PATENTANMELDUNG NR.**

EP 16 15 7676

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-05-2017

| Im Recherchenbericht angeführtes Patentdokument | Datum der Veröffentlichung | Mitglied(er) der Patentfamilie | Datum der Veröffentlichung |
|---|---|---|---|
| DE 20304846 U1 | 06-05-2004 | KEINE | |
| WO 2013086550 A2 | 20-06-2013 | AT 12825 U1<br>WO 2013086550 A2 | 15-12-2012<br>20-06-2013 |
| EP 0490371 A2 | 17-06-1992 | AU 645157 B2<br>BR 9105378 A<br>CA 2057551 A1<br>DE 69123030 D1<br>DE 69123030 T2<br>EP 0490371 A2<br>JP H06228669 A<br>NO 914901 A<br>US 5114472 A | 06-01-1994<br>25-08-1992<br>14-06-1992<br>12-12-1996<br>07-05-1997<br>17-06-1992<br>16-08-1994<br>15-06-1992<br>19-05-1992 |
| US 3737304 A | 05-06-1973 | KEINE | |
| DE 10201357 A1 | 07-08-2003 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2301662 A1
- DE 3905080 C1
- DE 69401105 T2
- DE 19605149 A1
- EP 0341203 A2
- DE 102011109681 A1
- DE 19838263 C2
- US 20130032767 A1
- JP 4854617 B
- EP 2324921 A1
- DE 202012011892 U1
- JP 2616043 B
- JP 02211293 A
- CN 104117371 A
- DE 102012219989

**In der Beschreibung aufgeführte Nicht-Patentliteratur**

- **W. REGULSKI et al.** Pressure drop in flow across ceramic foams-A numerical and experimental study. *Chemical Engineering Science,* 2015, vol. 137, 320-337